Europäisches Patentamt

(19) European Patent Office

Office européen des brevets

(11) Publication number: 0 169 285
A2

## (12) EUROPEAN PATENT APPLICATION

(21) Application number: 84306716.6

(22) Date of filing: 02.10.84

(51) Int. Cl.⁴: **A 01 B 13/08**

(30) Priority: 25.07.84 GB 8418999

(43) Date of publication of application:
29.01.86 Bulletin 86/5

(84) Designated Contracting States:
AT BE CH DE FR IT LI LU NL SE

(71) Applicant: BOMFORD AND EVERSHED LIMITED
Salford Priors
Evesham, Worcs. WR11 5SW(GB)

(72) Inventor: Fox, John Vaudrey
Herons Reach. Tiddington
Stratford-upon-Avon Warwickshire(GB)

(72) Inventor: Cutler, Frederick
15 Collinsfield Greenhill
Evesham Worcestershire(GB)

(72) Inventor: Osborne, Richard Charles
80 Throckmorton Road
Alcester Warwickshire(GB)

(74) Representative: Mayes, Stuart David et al,
BOULT, WADE & TENNANT 27 Furnival Street
London, EC4A 1PQ(GB)

(54) Subsoil cultivating tool.

(57) A subsoil cultivating tool comprises a support frame (2) and tines (8) mounted on the frame. Each tine has a leg (25) and a cultivator foot (11) mounted thereon, the leg extending generally downwardly from the support frame to the foot and being laterally narrow and flexible whereby to permit lateral deflection of the foot. A guide device (30, 31, 32) is connected between the frame and the leg at a location intermediate of the height thereof whereby to stabilise the leg.

FIG. 2.

1.

# SUBSOIL CULTIVATING TOOL

This invention relates to subsoil cultivating tools.

Modern cultivation techniques require that the soil surface remains flat and is disturbed as little as possible, surface cultivation being as shallow as possible whilst consistent with soil tilth production. From time to time it is necessary and advantageous to cultivate the soil to a greater depth in order to re-establish cracks in the subsoil to permit satisfactory root growth of crops.

Existing subsoil cultivating tools (or subsoilers) generally consist of a framework of longitudinal and transverse beams to which are attached one or more tines projecting downwards to engage with the soil. The framework also carries a coupling means for attachment to a tractor or other towing vehicle. Each tine consists of a leg section at the lower end of which is fixed a replaceable foot or point. The upper end of the leg is generally clamped to one or more of the transverse members of the framework, to facilitate adjustment of transverse spacing between adjacent tines.

In use the subsoiler is drawn through the ground and the shape and rake angle of the foot produce a downward force on the framework to pull the implement to its desired depth. By controlling the depth, the resulting up-thrust on the soil produces cracks which proceed upwards toward the soil surface, thus creating the desired fissuring effect. In order to maintain the motion of each tine foot in a suitably straight path through the ground, parallel to the direction of travel, in the presence of underground resistance from obstructions such as stones and hard patches of subsoil, the tine legs are generally made from substantial, thick-section material of considerable strength and lateral stiffness to provide the necessary directional stability at the foot. It is found however in practice that the lateral thickness of the leg material displaces a considerable volume of soil upwards, which forms a ridge on the surface and may also create large clods of soil on the surface behind the path of the tine. These effects represent a serious obstacle to subsequent surface cultivation operations, which require that the ground surface should be as flat as possible in order to cultivate at a constant shallow depth.

In the Applicant's prior U.K. Patent Application No. 8319273, the contents of which are here incorporated by reference, there is described and claimed a subsoil cultivating tool having a laterally narrow and flexible leg which causes no significant disturbance to the soil surface. It has now been found that increased stability, for harder ground conditions and so on, can be achieved by guide means connected to the leg intermediate of the height thereof.

The invention accordingly provides a subsoil cultivating tool comprising a support member, at least one tine mounted on the support member, the or each tine having a leg and a cultivator foot mounted on the leg, the leg extending generally downwardly from the support member to the foot and being laterally narrow and flexible whereby to permit lateral deflection of the foot, and guide means connected between the support member and the leg at a location intermediate of the height thereof whereby to stabilise the leg.

The leg described in the prior Application extends downwardly and rearwardly and because of this "backwardly swept" configuration the leg restores itself automatically when deflected by obstructions in the ground. The leg in the present invention may extend downwardly and rearwardly but this need not necessarily be the case due to the action of the guide means.

Accordingly, the invention also provides a subsoil cultivating tool comprising a support member, at least one tine mounted on the support member, the or each tine having a leg and a cultivator foot mounted on the leg, the leg extending generally downwardly but not rearwardly from the support member to the foot and being laterally narrow and flexible whereby to permit lateral deflection of the foot, and guide means connected between the support member and the leg at a location intermediate of the height thereof whereby to stabilise the leg.

The leg may in fact extend generally downwardly and forwardly from the support member to the foot.

5,

The guide means is preferably arranged in such a way that a lateral force on the leg produces a twisting of the leg.

Preferably, the guide means provides a pivotal connection, for preference about a generally vertical axis, between the support member and the leg. In this case, the guide means may comprise a first member attached to the leg and a second member attached to the support member, the first and second members being pivotally connected.

The guide means preferably extends forwardly of the leg, in which case the joint providing the pivotal connection, where present, would be located generally forwardly of the said intermediate location.

Typically, the said intermediate location is such as to be just above soil surface level when the tool is in use.

Optionally, the leg may be constructed of two or more parts, of which one part forms at least a portion of the leading edge of the tine and is flexibly mounted to the remainder of the tine, the guide means being connected to the said one part. Such flexible mounting may be a pivotal mounting.

The guide means may comprise a member attached to the support member and extending downwardly so as to provide the connection with the leg. Alternatively, the guide means may comprise a linkage of tie rods connected to the support member.

An embodiment of the invention will now be described, by way of example, with reference to the accompanying drawings, in which:

Figure 1 is a perspective view of a subsoil cultivating tool embodying the invention;

Figure 2 is a side elevation of one of the tines of the tool of Figure 1;

Figure 3 is a front elevation of the tine of Figure 2;

Figure 4 is a sectional view taken along the line IV-IV;

Figure 5 is a plan view of the tine foot in a deflected position, showing the forces acting on the foot; and

Figure 6 is a plan view of the tine leg in a deflected position, showing the forces acting on the leg.

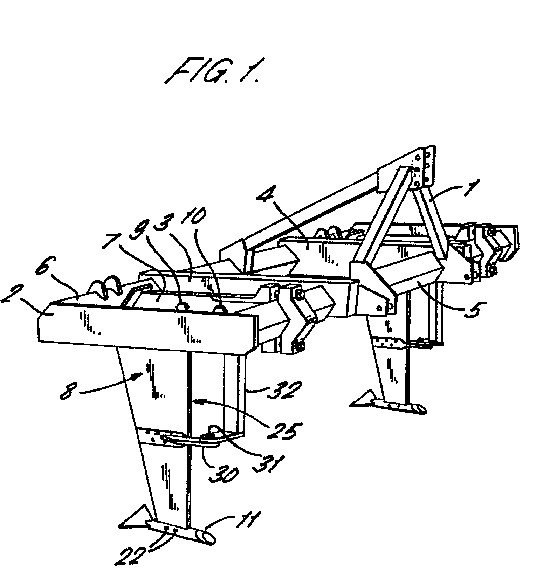

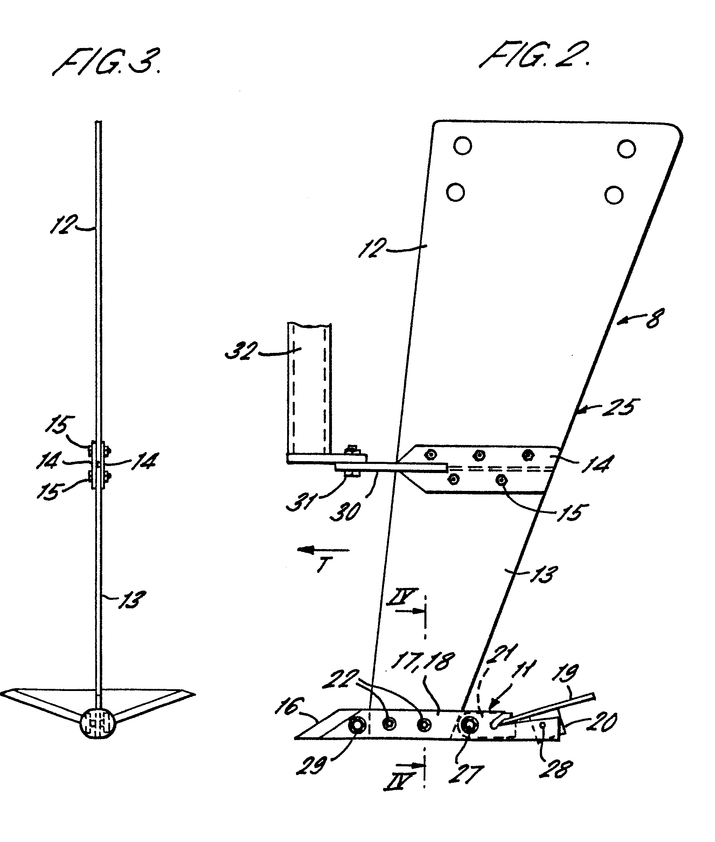

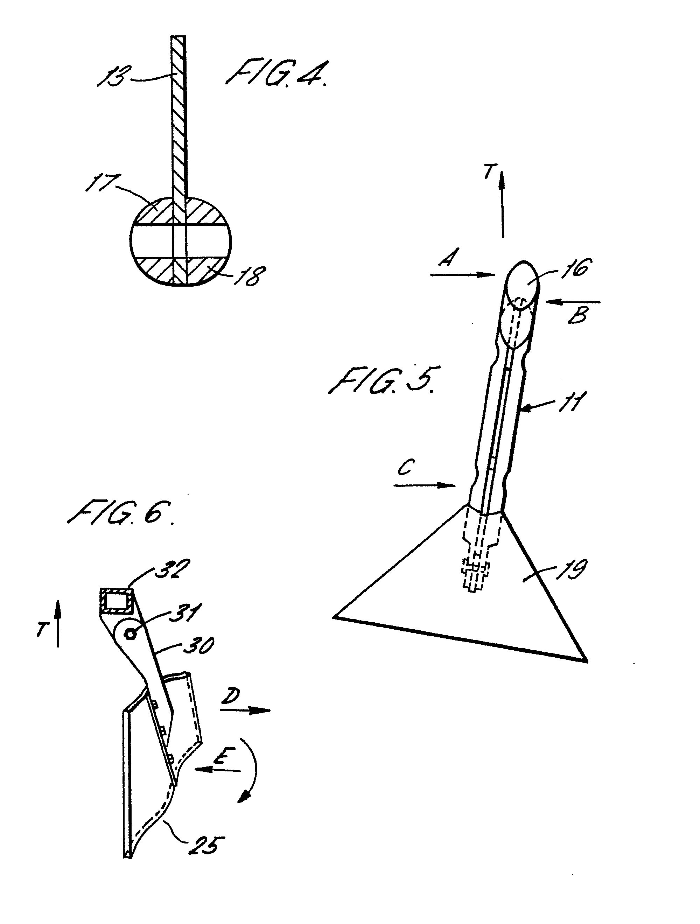

Referring to Figure 1, the cultivating tool comprises a support member in the form of a frame 2 comprising typical longitudinal members 3 and 4 and typical transverse members 5 and 6. The frame 2 is mounted in use on the rear of a tractor by means of a hitch frame 1 providing the usual three point mounting. Between the transverse members is mounted a bracket 7 on each side, attached at its ends to members 5 and 6. A tine 8 is secured to each bracket 7 by bolts 9, 10. Each tine 8 comprises a laterally narrow and flexible leg 25 in two parts, typically of steel, extending downwardly and slightly forwardly from the frame. An elongate foot 11 having generally parallel sides is attached to the lower end of the leg by pins 22. Referring to Figures 2 and 3, the leg 25 is constructed from thin sections 12, 13 joined together by plates 14, held each side of each section by bolts 15. Attached to one of the plates 14 is a forwardly extending first bracket 30 which is located, in use, just above soil surface level. The forward end of this bracket is pivotally connected on a vertical axis by a bolt 31 to a downwardly extending second bracket 32 rigidly attached to the frame 2. The brackets 30, 32 and bolt 31 form a guide device to stabilise the leg and therefore the foot.

The foot 11 consists of a hardened point 16, sides 17 and 18 and has attached at the rear end thereof a wing member 19 consisting of an upwardly inclined plate welded to a tongue 21 which is pivoted to members 17 and 18 by a bolt 27. Means for adjusting the inclination of the wing member is provided in the form of an adjustable cam 20 pivoted at 28 to the members 17 and 18 so as to support the wing member at a suitable angle: the cam has four straight edges each a different distance from the pivot giving a choice of four different inclinations of the wing memmber. One alternative inclination of wing member is shown in Figures 7 and 8 of the modified embodiment. The point 16 has its leading edge forwardly raked at an appropriate angle to the direction of motion. Secured to the point 16 is a tongue sandwiched between members 17 and 18; a bolt 29 passed through the members 17, 18 and this tongue has a nut threaded on its end for the purpose of clamping the members on the tongue, in the same manner as bolt 27 and its nut clamp the members on tongue 21.

Referring to Figure 4, the combination of the sides 17 and 18 attached each side of the lower leg section 13, produces a foot cross-section of substantially constant form from immediately behind the point 16 to the front of the wing member 19.

The thickness of the leg sections is generally not more than 20mm and a value of between 5mm and 15mm would be typical; 6mm and 12mm have been found successful in two examples. Thus the ratio of the thickness of the leg sections to the free height of leg (the vertical distance between the foot and the leg mounting) may be less than 1:40, less than 1:70 or even less than 1:100.

In use the frame 2 is drawn through the ground by means of its hitch 1 attached to a tractor or towing vehicle. As the foot 11 engages with the ground, the leading edge of the point 16 produces a downward force which draws the implement down to its working depth (with the plates 14 just above the surface of the ground) until it is resisted by the tractor hitch system.

As the foot proceeds through the ground (the direction of travel being shown at T) the leading edge of the point 16 and the width and tilt of the wing section 19 together provide an up-thrust to the soil producing cracks which proceed upward towards the soil surface to create the required cultivation effect. Because the leg is of very thin section the volume of soil displaced upwards is minimal, the surface is left flat; there being no significant disturbance or ridge formation to interfere with subsequent surface cultivation operations, and the leg itself does not take much power in being drawn through the ground.

When the foot meets some form of underground resistance, such as a stone or a harder patch of soil, the lateral flexibility of the leg allows the foot to deflect laterally away from the obstruction. The forms of the foot and the restraint applied to the leg by the forwardly extending pivoting bracket are such that a combination of restoring forces proportional to the magnitude of the deflection are set up to

11.

return the foot to its desired path parallel to the direction of motion of the tractor.

Figure 5 shows the effect of a sideways force A, presented to the left-hand side of the point 16 by an obstruction as seen from above. Some details are omitted from this Figure for the sake of clarity.

Because the foot is of substantially constant section along its length, each side is in contact with the wall of soil formed by its path and thus any slight movement is immediately resisted by restoring forces B and C from the soil, force B resisting lateral movement and force C the yawing movement about a generally vertical axis. Should the forces B & C be insufficient on their own to correct the effect of the disturbing force A, the restraint applied to the leg by the forwardly extending pivoting bracket will also counteract the disturbing force.

Figure 6 shows the effect of a sideways force D applied to the lower end of the leg seen from above, neither the division of the leg nor the foot being shown in this figure for the sake of clarity. The sideways force causes a sideways deflection of the leg 25 which, being restrained by the forwardly positioned pivot 31. is caused to be twisted in a sense to oppose the sideways movement. The twist produces an opposing force within the material which directs the foot back towards its desired path and, by virtue of the reaction between the ground and the twisted leg, causes the leg to "track" back to its original straight configuration.

It will be evident that the combination of restoring forces produced by the foot and the leg together always oppose any deflection applied to the point by an obstruction met during forward travel and are proportional in magnitude to the deflection.

Rather than a rigid connection between frame and tine, a pivotal connection may be substituted with a pivot axis either vertical or in a vertical plane orientated longitudinally of the direction of movement. This allows the tine greater freedom of movement and orientation in use, giving greater compensation for variations and obstacles in the soil. Similarly, the foot may be pivotally mounted on the leg about a generally horizontal axis, allowing the foot to "float" in use according to the forces it experiences.

The restraint of the forwardly placed pivot may be applied to the whole leg of the tine as described above, or alternatively to a separate front or shin section only, equivalent to shin section 23 described in prior U.K. Patent Application No. 8319273. In this alternative case, the front or shin section would itself be flexibly mounted to the remainder of the tine, such as by a pivotal connection to the rear leg section (equivalent to 13' in the prior Application), to allow the shin section to turn about an axis parallel to its major axis.

## CLAIMS

1. A subsoil cultivating tool comprising a support member (2), at least one tine (8) mounted on the support member, the or each tine having a leg (25) and a cultivator foot (11) mounted on the leg, the leg extending generally downwardly from the support member to the foot and being laterally narrow and flexible whereby to permit lateral deflection of the foot, and guide means (30, 31, 32) connected between the support member and the leg at a location intermediate of the height thereof whereby to stabilise the leg.

2. A subsoil cultivating tool comprising a support member (2), at least one tine (8) mounted on the support member, the or each tine have a leg (25) and a cultivator foot (11) mounted on the leg, the leg extending generally downwardly but not rearwardly from the support member to the foot and being laterally narrow and flexible whereby to permit lateral deflection of the foot, and guide means (30, 31, 32) connected between the support member and the leg at a location intermediate of the height thereof whereby to stabilise the leg.

15,

3. A tool as claimed in Claim 2 wherein the leg (25) extends generally downwardly and forwardly from the support member (2) to the foot (11).

4. A tool as claimed in any preceding claim wherein the guide means (30, 31, 32) is arranged in such a way that a lateral force on the leg (25) produces a twisting of the leg.

5. A tool as claimed in any preceding claim wherein the guide means (30, 31, 32) provides a pivotal connection between the support member (2) and the leg (25).

6. A tool as claimed in Claim 5 wherein the pivotal connection is about a generally vertical axis.

7. A tool as claimed in either Claim 5 or Claim 6 wherein the guide means (30, 31, 32) comprises a first member (30) attached to the leg and a second member (32) attached to the support member (2), the first and second members being pivotally connected.

8. A tool as claimed in any preceding claim wherein the guide means (30, 31, 32) extends forwardly of the leg (25).

9. A tool as claimed in Claim 8 as dependent on any one of Claims 5 to 7 wherein the joint providing the pivotal connection is located generally forwardly of the said intermediate location.

10. A tool as claimed in any preceding claim wherein the said intermedate location is such as to be just above soil surface level in use.

11. A tool as claimed in any preceding claim wherein the leg (25) is constructed of two or more parts, of which one part forms at least a portion of the leading edge of the tine (8) and is flexibly mounted to the remainder of the tine, the guide means (30, 31, 32) being connected to the said one part.

12. A tool as claimed in Claim 11 wherein the said one part is pivotally mounted to the remainder of the tine (8).

0169285

1/3

FIG. 1.

FIG. 3.

FIG. 2.

0169285

2/3

FIG.4.

13

17

18

T

A

B

16

FIG.5.

11

C

19

FIG.6.

32

31

T

30

D

E

25